# EUROPÄISCHE PATENTSCHRIFT

(11) **EP 2 637 067 B1**
(45) Veröffentlichungstag und Bekanntmachung des Hinweises auf die Patenterteilung: **05.09.2018**
(21) Anmeldenummer: 13156416.3
(22) Anmeldetag: 22.02.2013
(51) Int. Cl.: G05B 9/03, G05B 19/042

(54) **Sensoranordnung zum Detektieren eines sicheren Anlagenzustandes einer automatisiert betriebenen Anlage**
Sensor assembly for detecting the safe condition of an automatically operated system
Agencement de capteur destiné à détecter l'état sécurisé d'une installation pour une installation automatisée

(30) Priorität: 07.03.2012 DE 102012101933
(43) Veröffentlichungstag der Anmeldung: 11.09.2013
(73) Patentinhaber: Pilz GmbH & Co. KG, 73760 Ostfildern (DE)
(72) Erfinder: Arth, Christophe, 67470 Seltz-Eberbach (FR); Holzapfel, Erik, 73760 Ostfildern (DE); Bellingkrodt, Martin, 73760 Ostfildern (DE)
(74) Vertreter: Witte, Weller & Partner Patentanwälte mbB

(56) Entgegenhaltungen:
- DE-A1-102004 020 997
- DE-A1-102007 032 827
- DE-A1-102007 045 989
- DE-A1-102011 002 481

## Beschreibung

Die vorliegende Erfindung betrifft eine Sensoranordnung zum Detektieren eines sicheren Anlagenzustandes einer automatisiert betriebenen Anlage, mit einem Eingangskreis, der zum Aufnehmen eines ersten Eingangssignals und zum Aufnehmen von zumindest einem weiteren Eingangssignal ausgebildet ist, wobei das erste Eingangssignal von dem zu detektierenden sicheren Anlagenzustand abhängt, und wobei das weitere Eingangssignal von einem weiteren Zustand abhängt, mit zumindest einem ersten und einem zweiten Ausgang zum Ausgeben eines ersten und eines zweiten Ausgangssignals, mit einer Auswerteeinheit, die dazu ausgebildet ist, das erste Eingangssignal fehlersicher auszuwerten und in Abhängigkeit davon das erste und das zweite Ausgangssignal an dem ersten und zweiten Ausgang zu erzeugen, wobei das erste und das zweite Ausgangssignal ein redundantes Signalpaar bilden, welches gemeinsam den sicheren Anlagenzustand signalisiert, und mit einem ersten Gerätegehäuse, in dem der Eingangskreis und die Auswerteeinheit angeordnet sind, und mit einem vom ersten Gerätegehäuse räumlich getrennten ersten Betätiger, der das erste Eingangssignal erzeugt, wobei der erste Betätiger einen individuellen Indentifizierungscode aufweist, der über das erste Eingangssignal an die Auswerteeinheit übertragen wird.

Eine solche Vorrichtung ist aus DE 10 2004 020 997 A1 bekannt.

DE 103 37 660 A1 beschreibt eine Sensoranordnung mit einem Eingangskreis in Form eines sogenannten Empfangskopfes, der in der Lage ist, verschiedene Eingangssignale aufzunehmen. Die verschiedenen Eingangssignale stammen von mehreren Transpondern, wobei jeder Transponder ein individuelles Identifizierungssignal aussendet, wenn er in die Nähe des Empfangskopfes kommt. Anhand der Identifizierungssignale kann eine Auswerteeinheit erkennen, welcher Transponder zu einem bestimmten Zeitpunkt in der Nähe des Empfangskopfes ist.

Die bekannte Sensoranordnung dient insbesondere dazu, verschiedene Betriebspositionen eines beweglichen Teils zu detektieren. In einem Beispiel sind die Transponder an der seitlichen Kante eines Rolltores angeordnet. Je nach Öffnungs- oder Schließstellung des Rolltores nimmt der Empfangskopf ein anderes Transpondersignal als Eingangssignal auf. Die Auswerteeinheit kann anhand des empfangenen Transpondersignals die Öffnungs- oder Schließstellung des Rolltores bestimmen und in Abhängigkeit davon einen Steuerbefehl für eine Motorsteuereinheit erzeugen, mit der das Rolltor geöffnet oder geschlossen wird.

Die Steuerung des Rolltores in Abhängigkeit von der detektierten Position ist ein typisches Beispiel für einen automatisierten Prozess, bei dem mechanische Teile bewegt werden. Es gibt viele Fälle, in denen die Bewegung der Teile mit einer bestimmten Genauigkeit erfolgen muss. Daher ist die Bestimmung der Momentanposition und/oder die Bestimmung von anderen Bewegungsgrößen, etwa der Bewegungsgeschwindigkeit, notwendig. Etwaige Fehler können den gewünschten Betriebsablauf stören. Bei der automatisierten Herstellung von Produkten können sich Fehler insbesondere auf die Produktqualität und/oder die Produktivität auswirken.

Darüber hinaus gibt es Fälle, in denen die Betriebsposition eines beweglichen Teils sicherheitsrelevant ist, etwa bei einer Schutztür, die den Zugang zu einer gefährlichen Maschine verschließt. In einem solchen Fall muss sichergestellt sein, dass die Maschine nicht in Betrieb genommen werden kann, wenn die Schutztür geöffnet ist. Hier spielt die Genauigkeit der Positionsbestimmung keine Rolle, solange die geschlossene Schutztür zuverlässig erkannt wird. Andererseits darf ein Fehler in der Sensoranordnung keinesfalls dazu führen, dass die Maschine bei geöffneter Schutztür in Betrieb genommen werden kann.

Aus diesen unterschiedlichen Anforderungen haben sich Sensoranordnungen und Steuerungen entwickelt, die entweder für den normalen Betriebsablauf einer automatisierten Anlage benötigt werden, oder die für die Absicherung einer gefährlichen Maschine benötigt werden. In der Praxis unterscheidet man häufig zwischen sogenannten Standard-Anwendungen, die den gewünschten Betriebsablauf einer automatisierten Anlage betreffen, und Failsafe-Anwendungen, die im wesentlichen der Absicherung von gefährlichen Maschinenbewegungen oder ähnlichem dienen. Da ein Fehler in einer Failsafe-Anwendung die Gesundheit oder sogar das Leben von Personen gefährden können, während Fehler in einer Standard-Anwendung "lediglich" Auswirkungen auf die Qualität von Produkten und/oder die Anlagenproduktivität haben, benötigen Komponenten und Geräte für Failsafe-Anwendungen besondere Zulassungen von Aufsichtsbehörden, die nur erteilt werden, wenn die vorgesehene Sicherheitsfunktion auch in jedem denkbaren Fehlerfall gewährleistet ist. Komponenten für Failsafe-Anwendungen erfordern daher einen spürbar höheren Konstruktionsaufwand zum Erreichen der benötigten Fehlersicherheit im Vergleich zu Komponenten und Geräten für Standard-Anwendungen. Zudem muss jede Änderung an einem Gerät oder einer Komponente für eine Failsafe-Anwendung erneut von der Aufsichtsbehörde geprüft werden, da die Änderung Ursache für den Verlust der geforderten Sicherheitsfunktion im Fehlerfall sein könnte.

Aufgrund der höheren Anforderungen an die Fehlersicherheit gibt es bis heute eine Unterscheidung zwischen Geräten und Komponenten für Standard-Anwendungen und Geräten/Komponenten für Failsafe-Anwendungen. Die Sensoranordnung aus der eingangs genannten DE 103 37 660 A1 ermöglicht jedoch die Kombination einer Standard-Anwendung (Feststellen der aktuellen Betriebsposition des Rolltors für die Bewegungssteuerung) mit einer Sicherheitsfunktion (fehlersicheres Detektieren des vollständig geschlossenen Tors, etwa für die Verwendung als Schutztür). Um trotzdem eine Trennung zwischen Standard-Anwendung und Failsafe-Anwendung zu erhalten, schlägt DE 103 37 660 A1 eine Auswerteeinheit vor, die intern einen Standard-Teil und einen separaten Failsafe-Teil besitzt. Die Eingangssignale von den verschiedenen Transpondern werden den beiden Teilen parallel zugeführt. Die Ausgangssignale der Auswerteeinheit sind jedoch klar getrennt für Standard-Anwendungen und Failsafe-Anwendungen.

Die bekannte Sensoranordnung ermöglicht somit die Verwendung eines einzigen Sensorteils, der zum Empfang verschiedener Identifizierungssignale ausgebildet ist, wobei eines der Identifizierungssignale ein sicherheitsrelevantes Signal für eine Failsafe-Anwendung sein kann, während die anderen Signale Standard-Signale für die nicht-sicherheitsrelevante Steuerung eines Betriebsablaufs sind.

Die eingangs genannte DE 10 2004 020 997 A1 offenbart eine Sensoranordnung, die ausschließlich für Failsafe-Anwendungen gedacht ist. Auch diese bekannte Sensoranordnung besitzt einen Eingangskreis zum Aufnehmen eines Signals, das von einem Transponder stammt. Die Sensoranordnung ist redundant aufgebaut und besitzt zwei Mikrocontroller, die sich gegenseitig überwachen. Zwei Schaltelemente erzeugen redundante Ausgangssignale. Mit Hilfe dieser Sensoranordnung kann die Schließstellung einer Schutztür überwacht werden, wobei die redundanten Ausgangssignale nur gemeinsam die sichere Schließstellung der Schutztür signalisieren.

Eine ähnliche zweikanalige Sensoranordnung für Failsafe-Anwendungen ist aus EP 0 968 567 B2 bekannt,

DE 103 34 653 A1 offenbart eine weitere Sensoranordnung zum fehlersicheren Überwachen einer Schutztür. In diesem Fall ist im Eingangskreis zum Aufnehmen des Signals von einem Transponder ein Schaltelement angeordnet, mit dessen Hilfe das Eingangssignal von dem Transponder gezielt unterdrückt werden kann. Das Schaltelement ermöglicht regelmäßige Funktionstests, die eine fehlerfreie Funktion des Sensors gewährleisten.

Vor diesem Hintergrund ist es eine Aufgabe der vorliegenden Erfindung, eine alternative Sensoranordnung anzugeben, die sowohl für Standard-Anwendungen als auch für Failsafe-Anwendungen eingesetzt werden kann. Es ist insbesondere eine Aufgabe, eine solche Sensoranordnung anzugeben, die möglichst klein bauend und kostengünstig realisiert werden kann.

Gemäß einem Aspekt der vorliegenden Erfindung wird diese Aufgabe durch eine Sensoranordnung der eingangs genannten Art gelöst, mit zumindest einem weiteren Betätiger mit einem weiteren individuellen Indentifizierungscode, wobei die Auswerteeinheit ferner dazu ausgebildet ist, das weitere Eingangssignal auszuwerten und in Abhängigkeit davon ein drittes Ausgangssignal an dem ersten Ausgang und ein viertes Ausgangssignal an dem zweiten Ausgang zu erzeugen, wobei das dritte und das vierte Ausgangssignal ein nicht-redundantes Signalpaar bilden, das sich von dem redundanten Signalpaar unterscheidet, und wobei die Auswerteeinheit das erste Eingangssignal und das weitere Eingangssignal anhand des ersten und des weiteren individuellen Identifizierungscodes voneinander unterscheidet.

Die neue Sensoranordnung ist eine für Failsafe-Anwendungen ausgebildete, fehlersichere Sensoranordnung, da sie eine Auswerteeinheit aufweist, die dazu ausgebildet ist, das erste Eingangssignal fehlersicher auszuwerten und in Abhängigkeit davon ein redundantes Signalpaar zu erzeugen. "Fehlersicher" bedeutet in diesem Zusammenhang, dass die Sensoranordnung zumindest die Kategorie 3 bzw. SIL3 oder den Performancelevel PL d entsprechend der einschlägigen Normen EN 954-1, IEC 61508, ISO 13849 u.a. erfüllt.

Die neue Sensoranordnung besitzt ein erstes Gerätegehäuse, in dem der Eingangskreis und die Auswerteeinheit angeordnet sind, und sie besitzt einen vom ersten Gerätegehäuse räumlich getrennten ersten Betätiger, der das erste Eingangssignal erzeugt. Dies ermöglicht eine sehr robuste Sensoranordnung, die zum Detektieren der Betriebsposition eines bewegten Teils ausgebildet ist. Solche Sensoranordnungen werden sowohl für Standard-Anwendungen als auch für Failsafe-Anwendungen benötigt. Die Sensoranordnung dieser Ausgestaltung eignet sich insbesondere für die Detektion von Betriebspositionen, die sowohl für eine Standard-Anwendung als auch für eine Failsafe-Anwendung von Bedeutung sind. Dementsprechend ermöglicht diese Ausgestaltung eine besonders kostengünstige Realisierung für solche Anwendungen.

Der erste Betätiger weist einen individuellen Identifizierungscode auf, der über das zumindest eine Eingangssignal an die Auswerteeinheit übertragen wird. Vorteilhaft enthält der Betätiger einen Transponder, insbesondere einen RFID-Transponder. Der Eingangskreis beinhaltet einen Lesekopf zum Auslesen des Identifizierungscodes. Die Ausgestaltung bietet eine erhöhte Manipulationssicherheit und eine leichte Unterscheidung zwischen verschiedenen Eingangssignalen.

Schließlich beinhaltet die Sensoranordnung zumindest einen weiteren Betätiger mit einem weiteren individuellen Identifizierungscode, wobei die Auswerteeinheit das erste Eingangssignal und das weitere Eingangssignal anhand des ersten und des weiteren individuellen Identifizierungscodes voneinander unterscheidet. Dabei sind das erste Eingangssignal und das weitere Eingangssignal jeweils Signale, die sich im Wesentlichen nur durch ihren individuellen Identifizierungscode unterscheiden. In bevorzugten Ausführungsbeispielen beinhaltet die Sensoranordnung einen ersten Transponder im ersten Betätiger und einen weiteren Transponder im weiteren Betätiger, wobei die Auswerteeinheit anhand der Identifizierungscodes erkennt, ob es sich um das erste Eingangssignal oder um das weitere Eingangssignal handelt. Diese Ausgestaltung macht es möglich, für die Failsafe-Anwendung den ersten Betätiger zu verwenden, während für eine Standard-Anwendung der weitere Betätiger verwendet wird. Die Anpassung der Sensoranordnung an verschiedene Anwendungen ist in dieser Ausgestaltung sehr einfach und kostengünstig.

Das redundante Signalpaar beinhaltet ein erstes Ausgangssignal an dem ersten Ausgang und ein zweites Ausgangssignal an dem zweiten Ausgang, wobei diese beiden Signale jeweils die gleiche Information tragen. Prinzipiell würde also eines der Ausgangssignale ausreichen, um einen sicheren Zustand in Abhängigkeit von dem ersten Eingangssignal an eine übergeordnete Steuerung zu signalisieren. Es ist allerdings denkbar, dass eines der Ausgangssignale aufgrund eines Fehlers, etwa einem durchlegierten Transistor oder einem Querschluss zu einem Spannungspotential, einen Signalpegel annimmt, der fälschlicherweise den sicheren Zustand signalisieren könnte. Daher besitzt die neue Sensoranordnung den zweiten Ausgang, und das erste und das zweite Ausgangssignal signalisieren nur gemeinsam den sicheren Anlagenzustand.

Zusätzlich ist die Auswerteeinheit der neuen Sensoranordnung dazu ausgebildet, auch das weitere Eingangssignal auszuwerten und in Abhängigkeit davon ein drittes Ausgangssignal an dem ersten Ausgang und ein viertes Ausgangssignal an dem zweiten Ausgang zu erzeugen. Das dritte und das vierte Ausgangssignal bilden ein nicht-redundantes Signalpaar, das heißt sie tragen nicht dieselbe Information. Außerdem unterscheidet sich das nicht-redundante Signalpaar, bestehend aus dem dritten und vierten Ausgangssignal, von dem redundanten Signalpaar. Somit kann eine übergeordnete Steuerung erkennen, ob das an dem ersten und zweiten Ausgang ausgegebene Signalpaar einen sicheren Anlagenzustand signalisiert (die Auswerteeinheit erzeugt das erste und das zweite Ausgangssignal an dem ersten und dem zweiten Ausgang) oder nicht. Im letztgenannten Fall kann die Sensoranordnung jedoch mit Hilfe des dritten und des vierten Ausgangssignals nicht-sicherheitsrelevante Zustände signalisieren, wie etwa einen nicht-sicherheitsrelevanten Betriebszustand eines beweglichen Teils. Sowohl das redundante Signalpaar als auch das nicht-redundante Signalpaar werden an dem ersten und dem zweiten Ausgang bereitgestellt.

Mit anderen Worten ist die Auswerteeinheit der neuen Sensoranordnung in der Lage, den ersten und zweiten Ausgang sowohl für eine Failsafe-Anwendung als auch für eine Standard-Anwendung zu nutzen. Die neue Sensoranordnung kann daher wahlweise für Failsafe-Anwendungen und/oder für Standard-Anwendungen eingesetzt werden. Insbesondere ist es möglich, den ersten Ausgang und den redundanten zweiten Ausgang als nicht-redundante Einzelausgänge zu nutzen. Die neue Sensoranordnung besitzt daher im Vergleich zu bekannten Failsafe-Sensoranordnungen einen erweiterten Funktionsumfang. Der erweiterte Funktionsumfang beinhaltet, dass die redundanten Ausgänge in Abhängigkeit von einem nicht-sicherheitsrelevanten (weiteren) Eingangssignal als nicht-sichere Einzelausgänge verwendet werden. Die Auswerteeinheit erzeugt in Abhängigkeit von dem weiteren Eingangssignal ein informationstragendes drittes Ausgangssignal oder ein informationstragendes viertes Ausgangssignal an lediglich einem der redundanten Sicherheitsausgänge. Der jeweils andere Sicherheitsausgang wird mit einem definierten Ausgangssignal belegt, welches sicherstellt, dass eine Verwechslung mit dem redundanten Signalpaar, welches gemeinsam den sicheren Anlagenzustand signalisiert, ausgeschlossen ist.

Die neue Sensoranordnung lässt sich sehr kleinbauend und kostengünstig realisieren, da die für die Failsafe-Anwendung benötigte Auswerteeinheit nun auch für die Standard-Anwendung genutzt wird. Außerdem benötigt die neue Sensoranordnung keine zusätzlichen Ausgänge für die Standardsignale. Aus dem selben Grund kann die neue Sensoranordnung klein und kompakt realisiert werden. Die genannte Aufgabe ist daher vollständig gelöst.

In einer bevorzugten Ausgestaltung erzeugt die Auswerteeinheit das redundante Signalpaar mit dem ersten und zweiten Ausgangssignal genau dann, wenn der Eingangskreis nur das erste Eingangssignal aufnimmt.

In dieser Ausgestaltung erzeugt die Auswerteeinheit das redundante Signalpaar nur, wenn der Eingangskreis lediglich das erste Eingangssignal aufnimmt. Wenn zusätzlich zu dem ersten Eingangssignal ein weiteres Eingangssignal aufgenommen wird, erzeugt die Auswerteeinheit das redundante Signalpaar nicht, selbst wenn zusätzlich auch das erste Eingangssignal aufgenommen wird. Diese Ausgestaltung gewährleistet, dass das sicherheitsrelevante redundante Signalpaar nur dann ausgegeben wird, wenn die Sensoranordnung als reine Failsafe-Anwendung arbeitet. Die Ausgestaltung beinhaltet, dass die Auswerteeinheit keine UND-Verknüpfung zwischen dem ersten Eingangssignal und dem weiteren Eingangssignal vornimmt. Das redundante Signalpaar hängt nur von dem ersten Eingangssignal ab. Die Ausgestaltung besitzt den Vorteil, dass die Sicherheitsfunktion der neuen Sensoranordnung unverändert ist im Vergleich zu bekannten Failsafe-Sensoranordnungen. Eine Beeinflussung der Sicherheitsfunktion durch das weitere Eingangssignal wird verhindert. Infolgedessen ermöglicht diese Ausgestaltung eine kostengünstige Kompatibilität mit bekannten Sensoranordnungen für Failsafe-Anwendungen, jedoch mit dem nun erweiterten Funktionsumfang.

In einer weiteren Ausgestaltung sind die Ausgangssignale am ersten und zweiten Ausgang jeweils binäre Signale, die entweder einen aktiven ersten oder einen passiven zweiten Signalpegel aufweisen, wobei das erste und das zweite Ausgangssignal jeweils den aktiven ersten Signalpegel aufweisen.

In dieser Ausgestaltung besitzen das erste und das zweite Ausgangssignal, die zusammen das redundante Signalpaar bilden, jeweils zumindest zeitweise den aktiven Signalpegel. Der aktive Signalpegel setzt eine Betriebsspannung und eine entsprechende Inbetriebnahme der Sensoranordnung voraus. Im Vergleich dazu kann der passive Signalpegel in einigen Ausführungsbeispielen ein Signalpegel sein, der dem Signalpegel an dem ersten und zweiten Ausgang bei ausgeschalteter Sensoranordnung entspricht. Es ist jedoch in anderen Ausführungsbeispielen möglich, dass sich auch der passive zweite Signalpegel von einem "nicht vorhandenen" Ausgangssignal unterscheidet. In einigen Ausführungsbeispielen ist der aktive erste Signalpegel eine positive Spannung, die auf ein Referenzpotential bezogen ist, und der passive zweite Signalpegel ist eine Spannung, die in etwa dem Referenzpotential entspricht. In einigen Ausführungsbeispielen können die Ausgangssignale am ersten und zweiten Ausgang getaktete binäre Signale sein, die wechselweise den aktiven ersten oder passiven zweiten Signalpegel annehmen. Die Ausgestaltungen besitzen den Vorteil, dass das Signalisieren des sicheren Anlagenzustandes mit Hilfe des ersten und zweiten Ausgangssignals nur möglich ist, wenn die Auswerteeinheit das erste und zweite Ausgangssignal gezielt erzeugt. Damit ist das für Failsafe-Anwendungen bevorzugte Ruhestromprinzip realisiert.

In einer weiteren Ausgestaltung entspricht das dritte Ausgangssignal oder das vierte Ausgangssignal dem passiven zweiten Signalpegel.

In dieser Ausgestaltung besitzt eines der beiden Ausgangssignale des nicht-redundanten Signalpaars dauerhaft oder zumindest weitgehend dauerhaft den passiven zweiten Signalpegel. Mit anderen Worten ist der entsprechende Ausgang quasi "abgeschaltet". Im Gegensatz dazu besitzen das erste und das zweite Ausgangssignal in den bevorzugten Ausführungsbeispielen jeweils den aktiven ersten Signalpegel. Die Ausgestaltung ist eine einfache und kostengünstige Möglichkeit, um die Ausgangssignale für Standard-Anwendungen zuverlässig von den sicherheitsrelevanten Ausgangssignalen für Failsafe-Anwendungen zu unterscheiden.

In einer weiteren Ausgestaltung weisen das erste und das zweite Ausgangssignal regelmäßig wechselnde Signalpegel auf.

In einigen bevorzugten Ausführungsbeispielen sind das erste und das zweite Ausgangssignal Taktsignale mit einer definierten und vorzugsweise festen Periodendauer/Frequenz. In einigen Ausführungsbeispielen besitzen das erste und das zweite Ausgangssignal jeweils eine andere Taktfrequenz und/oder Phasenlage. Diese Ausgestaltungen verwenden dynamische Ausgangssignale zum Signalisieren eines sicheren Anlagenzustandes. Da dynamische Signale mit einer definierten Periodendauer/Frequenz nicht "zufällig" entstehen, bieten diese Ausgestaltungen eine erhöhte Fehlersicherheit. Querschlüsse der Signalleitungen, auf denen das erste und zweite Ausgangssignal übertragen werden, lassen sich einfacher erkennen, wenn die Taktsignale unterschiedliche Frequenzen und/oder Phasenlagen haben.

In einer weiteren Ausgestaltung erzeugt die Auswerteeinheit das redundante Signalpaar und das nicht-redundante Signalpaar in zeitlich aufeinanderfolgenden Intervallen.

In dieser Ausgestaltung ermöglicht die neue Sensoranordnung ein Zeitschlitzverfahren zum Übertragen des redundanten Signalpaars und des nicht-redundanten Signalpaars. Beispielsweise kann das redundante Signalpaar - in Abhängigkeit von dem ersten Eingangssignal - in periodischen Zeitintervallen erzeugt werden, die an einen Bearbeitungszyklus einer übergeordneten Steuerung angepasst sind. Zwischen den Zeitintervallen für die Übertragung des redundanten Signalpaars können das dritte und vierte Ausgangssignal übertragen werden. Des weiteren beinhaltet diese Ausgestaltung, dass das nicht-redundante Signalpaar nach dem Zurücknehmen des redundanten Signalpaars erzeugt wird, etwa um nach Abschalten der Anlage einen Standard-Steuerbefehl an die übergeordnete Steuerung zu schicken. Die Ausgestaltung ermöglicht die kombinierte Verwendung der neuen Sensoranordnung sowohl für eine Standard-Anwendung als auch für eine Failsafe-Anwendung mit einer geringen Anzahl von Leitungen zwischen der Sensoranordnung und der übergeordneten Steuerung.

In einer weiteren Ausgestaltung integriert die Auswerteeinheit den individuellen Identifizierungscode in zumindest eines der Ausgangssignale.

In dieser Ausgestaltung ist der individuelle Identifizierungscode in zumindest einem der Ausgangssignale enthalten. Auf diese Weise kann die neue Sensoranordnung den individuellen Identifizierungscode einer übergeordneten Steuereinheit zur Verfügung stellen. Die Ausgestaltung besitzt in Kombination mit binären Signalen den Vorteil, dass die Integration des individuellen Identifizierungscodes zu einem dynamischen Ausgangssignal führt, was im Hinblick auf Failsafe-Anwendungen von Vorteil ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung einer automatisierten Anlage mit einem Ausführungsbeispiel der neuen Sensoranordnung, und
- Fig. 2: ein Ausführungsbeispiel der Sensoranordnung in der Anlage gemäß Fig. 1.

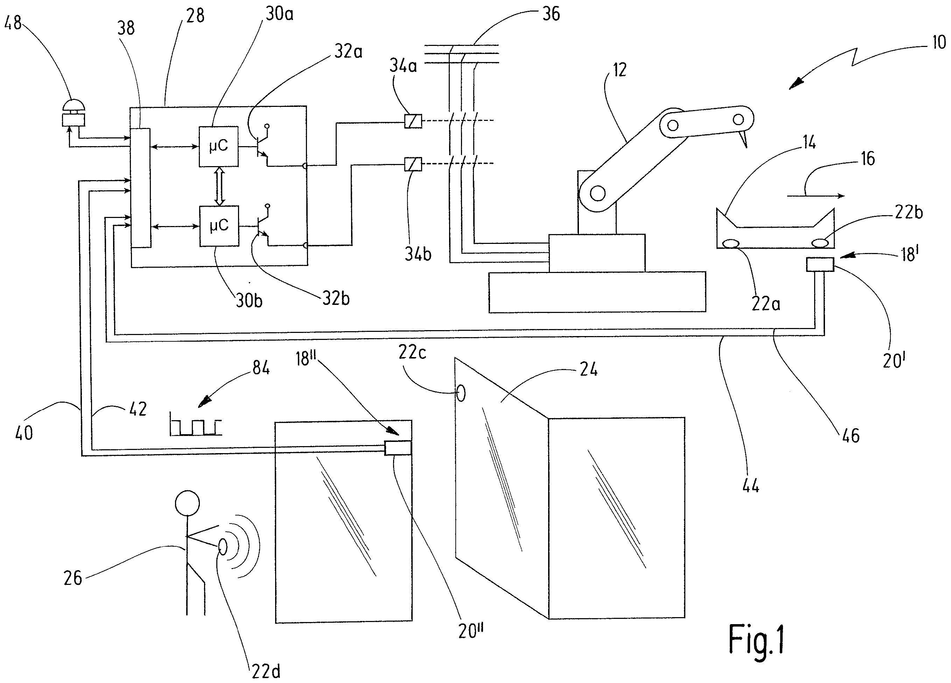

In Fig. 1 ist eine Anlage mit mehreren Ausführungsbeispielen der neuen Sensoranordnung in ihrer Gesamtheit mit der Bezugsziffer 10 bezeichnet. Die Anlage 10 beinhaltet hier einen Roboter 12, der Werkstücke (hier nicht dargestellt) in einen Transportwagen 14 ablegt. Der Transportwagen 14 kann in Richtung des Pfeils 16 bewegt werden, etwa um die Werkstücke einem weiteren, hier nicht dargestellten Roboter zuzuführen. Die Anlage 10 ist hier lediglich beispielhaft dargestellt, und sie zeigt nur eine von vielen Anwendungen für die neue Sensoranordnung.

Mit der Bezugsziffer 18' ist ein Ausführungsbeispiel der neuen Sensoranordnung bezeichnet. Die Sensoranordnung 18' besitzt einen Sensorteil 20' und mehrere Betätiger 22a, 22b, die räumlich von dem Sensorteil 20' getrennt sind. In dem hier gezeigten Beispiel sind die Betätiger 22a, 22b an verschiedenen Stellen des Transportwagens 14 angeordnet. Der Sensorteil 20' ist in der Lage, die Anwesenheit eines Betätigers 22a, 22b zu detektieren, wenn der entsprechende Betätiger in die Nähe des Sensorteils 20' kommt. Ist die Entfernung zwischen Betätiger 22a und Sensorteil 20' zu groß, kann der Sensorteil 20' den Betätiger nicht detektieren, was in dem in Fig. 1 dargestellten Fall für den Betätiger 22a gilt. Mit Hilfe der Betätiger 22a, 22b kann der Sensorteil 20' detektieren, welches Ende des Transportwagens 14 zu einem definierten Zeitpunkt im Bereich des Sensorteils 20' steht. Eine solche Information ist für die Steuerung des Betriebsablaufs der Anlage 10 von Bedeutung, das heißt, es handelt sich in diesem Fall um eine Standard-Anwendung, bei der mit Hilfe der Sensoranordnung 18' die Position des Transportwagens 14 bestimmt wird.

Häufig sind die Bewegungen des Roboters 12 so schnell, dass sie eine Gefahr für Personen im Arbeitsbereich des Roboters 12 darstellen. Daher wird der Arbeitsbereich von Robotern in der Regel mit Schutzzäunen und Schutztüren abgesichert. Die Schutztüren ermöglichen einen Zugang in den Arbeitsbereich des Roboters 12, um eine Störung zu beseitigen. Im normalen Arbeitsbetrieb muss die Schutztür jedoch geschlossen sein, um eine Gefährdung von Personen zu vermeiden.

Bezugsziffer 24 bezeichnet eine solche Schutztür, deren Schließposition hier mit einer weiteren Sensoranordnung 18" überwacht wird. An der Schutztür 24 ist ein weiterer Betätiger 22c angeordnet. Der Sensorteil 20" der Sensoranordnung 18" kann ein vom Betätiger 22c erzeugtes Signal (hier nicht dargestellt) nur detektieren, wenn die Schutztür 24 geschlossen ist und der Betätiger 22c sich dementsprechend in der Nähe des Sensorteils 20" befindet.

Im dargestellten Ausführungsbeispiel beinhaltet die Sensoranordnung 18" einen weiteren Betätiger 22d, der hier von einer Bedienperson 26 gehalten wird. Der Betätiger 22d kann beispielsweise verwendet werden, um ein nichtsicherheitsrelevantes Signal über die Sensoranordnung 18" an eine übergeordnete Steuerung 28 zu übertragen. In anderen Ausführungsbeispielen wird die Sensoranordnung 18" jedoch ausschließlich für die Überwachung der Schließposition der Schutztür 24 eingesetzt, d.h. der Betätiger 22d entfällt in diesen Fällen.

Die Steuerung 28 ist hier in Form einer Sicherheitssteuerung dargestellt, die über mehrere redundante Signalverarbeitungskanäle 30a, 30b verfügt. Dementsprechend besitzt die Steuerung 28 zumindest zwei redundante Schaltelemente 32a, 32b. Die Signalverarbeitungskanäle 30a, 30b verarbeiten Eingangssignale der Steuerung 28 und erzeugen in Abhängigkeit von den Eingangssignalen Steuersignale, mit denen Aktoren in der Anlage 10 angesteuert werden. Zu diesen Aktoren gehören hier zwei Schütze 34a, 34b, deren Arbeitskontakte seriell zwischen einer Stromversorgung 36 und elektrischen Antrieben des Roboters 12 angeordnet sind. Mit Hilfe der Schütze 34a, 34b kann die Steuerung 28 die Stromversorgung für den Roboter 12 in fehlersicherer Weise unterbrechen.

Häufig wird die Absicherung einer gefährlichen Maschine, wie hier dem Roboter 12, mit Hilfe einer speziell für die Failsafe-Anwendung ausgebildeten Sicherheitssteuerung realisiert, während der Betriebsablauf, d.h. die Standard-Anwendung, mit Hilfe einer separaten, nicht-fehlersicheren Betriebssteuerung gesteuert wird. Es gibt jedoch auch Fälle, in denen eine Sicherheitssteuerung zusätzlich zu der Failsafe-Anwendung auch die Standard-Anwendung realisiert. Eine geeignete Steuerung ist beispielsweise die fehlersichere Steuerung PSS® 4000 der Pilz GmbH & Co. KG, Ostfildern, Deutschland.

Die Steuerung 28 besitzt einen Schnittstellenteil 38, an dem Eingangssignale zugeführt und (weitere) Ausgangssignale bereitgestellt werden können. Die Ausgänge der Schaltelemente 32a, 32b, die für die Ansteuerung der redundanten Schütze 34a, 34b verwendet werden, sind typischerweise auch Bestandteil des Schnittstellenteils 38, wobei die hiesige Darstellung aus Gründen der Übersichtlichkeit gewählt ist.

Im dargestellten Ausführungsbeispiel ist der Sensorteil 20" der Sensoranordnung 18" über eine erste Leitung 40 und eine zweite Leitung 42 mit dem Schnittstellenteil 38 der Steuerung 28 verbunden. Der Sensorteil 20" stellt über die Leitungen 40, 42 zwei Ausgangssignale bereit, die der Steuerung 28 als (sicherheitsrelevante) Sensorsignale zugeführt sind.

Der Sensorteil 20' der Sensoranordnung 18' ist über zwei weitere Leitungen 44, 46 mit dem Schnittstellenteil 38 der Steuerung 28 verbunden. Über die Leitungen 44, 46 stellt der Sensorteil 20' zwei Ausgangssignale für die Steuerung 28 zur Verfügung, die eine Betriebsposition des Transportwagens 14 repräsentieren.

Die Funktionsweise der Anlage 10 ist wie folgt: Die Steuerung 28 liest über die Leitungen 44, 46 in definierten, wiederkehrenden Zeitintervallen die Ausgangssignale der Sensoranordnung 18' ein und bestimmt mit Hilfe der eingelesenen Signale die aktuelle Betriebsposition des Transportwagens 14. In Abhängigkeit davon und in Abhängigkeit von weiteren Eingangssignalen (hier nicht dargestellt) erzeugt die Steuerung 28 Steuersignale für Aktoren, mit denen der Roboter 12 und der Transportwagen 14 bewegt werden, um einen gewünschten Betriebsablauf zu realisieren. Dieser Steuerkreis realisiert eine Standard-Anwendung.

Des Weiteren liest die Steuerung 28 in definierten, wiederkehrenden Zeitintervallen die Ausgangssignale der Sensoranordnung 18" ein, die die Sensoranordnung 18" über die Leitungen 40, 42 bereitstellt. Die Steuerung 28 kann weitere Eingangssignale von weiteren Sensoren einlesen, wie hier beispielsweise anhand des Not-Aus-Tasters 48 dargestellt ist. Die redundanten Signalverarbeitungskanäle 30a, 30b werten die Ausgangssignale von der Sensoranordnung 18" und dem Not-Aus-Taster 48 aus und steuern in Abhängigkeit davon die Schaltelemente 32a, 32b an. Der Roboter 12 wird über die Schütze 34a, 34b nur dann mit der Stromversorgung 36 verbunden, wenn die Schutztür 24 geschlossen ist und der Not-Aus-Taster 48 nicht betätigt ist.

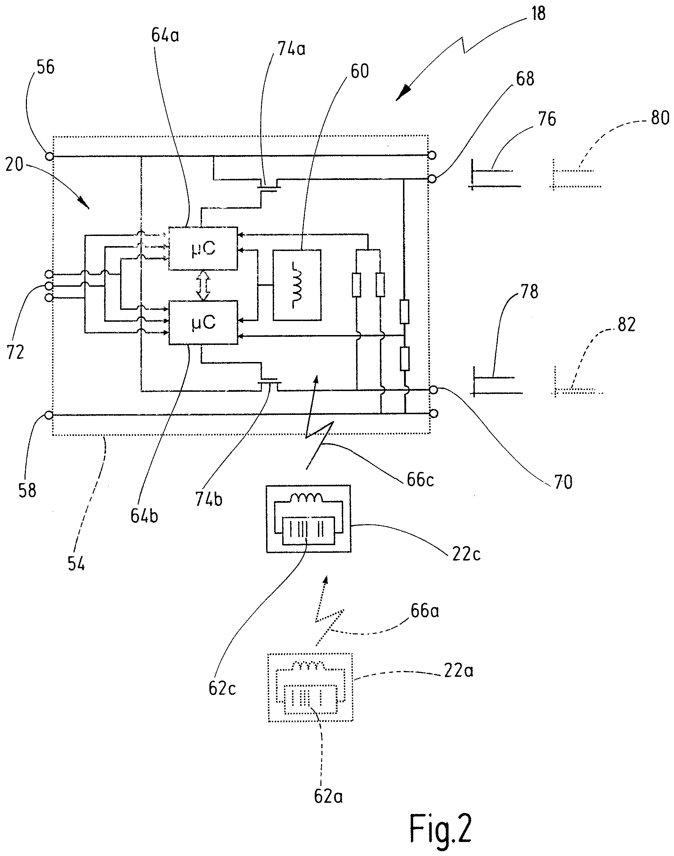

Fig. 2 zeigt ein Ausführungsbeispiel der neuen Sensoranordnungen 18', 18". In den bevorzugten Ausführungsbeispielen sind die Sensorteile 20', 20" der Sensoranordnungen 18', 18" identisch, so dass für die Sensoranordnung 18' (Standard-Anwendung) und die Sensoranordnung 18" (Failsafe-Anwendung) ein gemeinsamer Ersatzteilvorrat bereitgehalten werden kann. Dementsprechend wird bei der nachfolgenden Beschreibung nicht mehr zwischen den Sensoranordnungen 18', 18" unterschieden.

Die Sensoranordnung 18 besitzt ein Gerätegehäuse 54, in dem der Sensorteil 20 angeordnet ist. In einigen Ausführungsbeispielen ist das Gerätegehäuse 54 vergossen oder in anderer Weise spritzwasserdicht geschlossen. Am Gerätegehäuse 54 sind Anschlusspins angeordnet, die einen elektrischen Anschluss der Sensoranordnung 18 ermöglichen. Im dargestellten Ausführungsbeispiel dient ein Anschlusspin 56 zum Zuführen einer Betriebsspannung und ein Anschlusspin 58 zum Zuführen einer Betriebsmasse, auf die die Betriebsspannung bezogen ist. Mit der Bezugsziffer 60 ist ein Eingangskreis zum Aufnehmen von Eingangssignalen bezeichnet. Der Eingangskreis 60 beinhaltet im bevorzugten Ausführungsbeispiel einen Lesekopf zum Auslesen eines Transponders. Die Betätiger 22a, 22c beinhalten jeweils einen Transponder mit einem individuellen Identifizierungscode, der in Fig. 2 vereinfacht bei den Bezugsziffern 62a, 62c dargestellt ist. Jeder Transponder erzeugt ein Signal, das den jeweiligen Identifizierungscode enthält. Der Eingangskreis 60 nimmt die Transpondersignale als Eingangssignale auf und stellt den jeweiligen Identifizierungscode zwei Mikrocontrollern 64a, 64b zur Verfügung. Die Mikrocontroller 64a, 64b bilden zusammen eine Auswerteeinheit, die das jeweilige Eingangssignal 66a, 66c von den Betätigern 22a, 22c fehlersicher auswertet und in Abhängigkeit davon Ausgangssignale an Anschlusspins 68, 70 bereitstellt. Die Anschlusspins 68, 70 sind über die Leitungen 40, 42 oder 44, 46 mit der übergeordneten Steuerung 28 verbunden (siehe Fig. 1).

Anstelle von Mikrocontrollern kann die neue Sensoranordnung 18 andere Signalverarbeitungsschaltkreise aufweisen, beispielsweise in Form von FPGAs, ASICs und anderem. Des Weiteren ist es möglich, die Auswerteeinheit mit einem Signalverarbeitungskanal fehlersicher auszubilden, wie dies in der eingangs genannten DE 103 34 653 A1 beschrieben ist.

In den bevorzugten Ausführungsbeispielen besitzt die Sensoranordnung 18 ferner zumindest einen weiteren Anschlusspin 72, über den der Auswerteeinheit 64a, 64b ein externes Freigabesignal zugeführt werden kann. Ein solches Freigabesignal ermöglicht eine vorteilhafte Reihenschaltung von Sensoren, wie dies in der eingangs genannten DE 10 2004 020 997 A1 beschrieben ist.

Die Auswerteeinheit 64a, 64b steuert in Abhängigkeit von dem Eingangssignal 66a oder 66c und gegebenenfalls in Abhängigkeit von einem oder mehreren Freigabesignalen an den Anschlusspins 72 zwei redundante Schaltelemente 74a, 74b an. Mit Hilfe der Schaltelemente 74a, 74b erzeugt die Auswerteeinheit 64a, 64b die Ausgangssignale an den Anschlusspins 68, 70.

Wenn die Auswerteeinheit 64a, 64b das Eingangssignal 66c von dem Betätiger 22c an der Schutztür 24 erhält, erzeugt die Auswerteeinheit 64a, 64b ein erstes Ausgangssignal 76 und ein zweites Ausgangssignal 78, die zusammen ein redundantes Signalpaar bilden, welches den sicheren Anlagenzustand "geschlossene Schutztür" signalisiert. Wie in Fig. 2 vereinfacht dargestellt ist, besitzen die Ausgangssignale 76, 78 in den bevorzugten Ausführungsbeispielen jeweils einen Spannungspegel, der in etwa der Betriebsspannung entspricht. In weiteren Ausführungsbeispielen können das erste und das zweite Ausgangssignal 76, 78 wechselnde Signalpegel mit einer definierten Frequenz aufweisen, wie dies vereinfacht bei der Bezugsziffer 84 in Fig. 1 dargestellt ist. Vorzugsweise besitzen das erste und zweite Ausgangssignal in diesen Fällen verschiedene Frequenzen und/oder Phasenlagen, um der übergeordneten Steuerung 28 eine Querschlussprüfung zu ermöglichen.

Wenn die Auswerteeinheit 64a, 64b hingegen das Eingangssignal 66a vom Betätiger 22a erhält, erzeugt sie mit Hilfe der Schaltelemente 74a, 74b ein drittes Ausgangssignal 80 und ein viertes Ausgangssignal 84 an den Anschlusspins 68, 70. Das dritte und vierte Ausgangssignal 80, 82 bilden ein nicht-redundantes Signalpaar, das sich von dem redundanten Signalpaar 76, 78 unterscheidet. Beispielsweise erzeugt die Auswerteeinheit 64a, 64b das dritte Ausgangssignal 80 mit einem High-Pegel, der in etwa der Betriebsspannung entspricht, während das vierte Ausgangssignal 82 dauerhaft einen Signalpegel besitzt, der in etwa dem Massepegel am Anschlusspin 58 entspricht.

In einem bevorzugten Ausführungsbeispiel ist die Sensoranordnung 18 in der Lage, drei verschiedene Betätiger anhand der entsprechenden Eingangssignale 66 zu erkennen und in Abhängigkeit davon verschiedene Signalpaare an den Anschlusspins 68, 70 zu erzeugen. In einem Ausführungsbeispiel realisiert die Sensoranordnung folgende Logiktabelle:

| E1 | E2 | E3 | A1 | A2 |
|---|---|---|---|---|
| 0 | 0 | 0 | 0 | 0 |
| 0 | 0 | 1 | 0 | 1 |
| 0 | 1 | 0 | 1 | 0 |
| 0 | 1 | 1 | 0 | 0 |
| | 0 | 0 | 1 | 1 |
| | 0 | 1 | 0 | 0 |
| 1 | 1 | 0 | 0 | 0 |
| 1 | 1 | 1 | 0 | 0 |

In diesem Fall bezeichnet E1 ein erstes Eingangssignal, das einen sicherheitsrelevanten Anlagenzustand, wie etwa die geschlossene Schutztür 24, signalisiert. E2 und E3 sind nicht-sicherheitsrelevante Eingangssignale, die weitere Zustände, wie etwa die Betriebsposition des Transportwagens 14 oder ein mit Hilfe des Betätigers 22d erzeugtes Bedienersignal, repräsentieren. Wie man anhand der obigen Tabelle erkennen kann, erzeugt die Sensoranordnung 18 das redundante Signalpaar mit zwei aktiven Signalpegeln ausschließlich in dem Fall, dass nur das erste Eingangssignal E1 aufgenommen wird. Sobald mehr als ein Eingangssignal aufgenommen wird, erzeugt die Auswerteeinheit an den Anschlusspins 68, 70 lediglich die passiven Signalpegel, die in der Tabelle mit "0" symbolisiert sind. Wenn lediglich das zweite Eingangssignal E2 aufgenommen wird, erzeugt die Sensoranordnung 18 mit Hilfe des ersten Schaltelements 74a einen aktiven Signalpegel am Anschlusspin 68, während am Anschlusspin 70 ein passiver Signalpegel erzeugt wird. Auf diese Weise kann die Sensoranordnung der übergeordneten Steuerung 28 mitteilen, dass das weitere Eingangssignal E2 erkannt wurde. Dies kann beispielsweise von dem Betätiger 22a stammen.

In entsprechender Weise erzeugt die Sensoranordnung 18 am Anschlusspin 68 einen passiven Signalpegel und am Anschlusspin 70 einen aktiven Signalpegel, wenn lediglich das dritte Eingangssignal, beispielsweise von dem Betätiger 22b, erkannt wurde.

Insgesamt kann die neue Sensoranordnung 18 somit ein sicherheitsrelevantes, redundantes Signalpaar sowie alternativ zwei nicht-redundante Signalpaare an den Anschlusspins 68, 70 erzeugen. Dementsprechend stellt die neue Sensoranordnung in Abhängigkeit von dem ersten Eingangssignal oder einem weiteren Eingangssignal unterschiedliche Signalpaare auf den redundanten Ausgangsleitungen 40, 42 bzw. 44, 46 zur Verfügung. Der Sensorteil 20 der Sensoranordnung 18 kann daher wahlweise als Sicherheitssensor zum Überwachen der Schutztür 24 oder als Standard-Sensor zum Bestimmen der Betriebsposition eines beweglichen Teils verwendet werden, wobei jeweils dieselben Anschlusspins 68, 70 verwendet werden. In einem bevorzugten Ausführungsbeispiel besitzt die Sensoranordnung 18 einen Anschlussstecker (male oder female), in dem alle benötigten Anschlusspins integriert sind. In einigen Ausführungsbeispielen ist der Anschlussstecker ein 6- oder 8-poliger Stecker, d.h. die Sensoranordnung besitzt maximal 8 Anschlusspins. Bevorzugt besitzen alle Ausführungsbeispiele der neuen Sensoranordnung eine definierte Anzahl von Anschlusspins, die aufgrund der Abmessungen des Gerätegehäuses 54 und/oder aufgrund der Abmessungen eines gemeinsamen Anschlusssteckers begrenzt ist. Insbesondere beträgt die Anzahl der Anschlusspins, an denen die neue Sensoranordnung Ausgangssignale ausgeben kann, in den bevorzugten Ausführungsbeispielen genau zwei.

In einer Variante des in Fig. 1 gezeigten Ausführungsbeispiels kann der Bediener 26 mit dem Betätiger 22d ein Standard-Steuersignal an die Steuerung 28 übertragen, nachdem er die Schutztür 24 geöffnet hat. Beispielsweise kann er mit Hilfe des Betätigers 22d einen Steuerbefehl über die Sicherheitsleitungen 40, 42 an die Steuerung 28 übertragen, wobei die Steuerung 28 in Abhängigkeit von dem Standard-Steuerbefehl eine definierte Betriebsposition des Roboters 12 herbeiführt, die einen Wartungsvorgang erleichtert. Im Gegensatz zu bisherigen Anlagen kann der Bediener 26 den Standard-Steuerbefehl über die sicherheitsrelevante Sensoranordnung 18" an die Steuerung 28 übertragen, nachdem die Sensoranordnung 18" zuvor das redundante Signalpaar 76, 78 zurückgenommen hat und die Steuerung 28 dementsprechend die Stromversorgung 36 zum Roboter 12 unterbrochen hat. Die Sensoranordnung 18 überträgt das nicht-redundante Signalpaar und das redundante Signalpaar folglich in zeitlich aufeinanderfolgenden Intervallen.

In weiteren Ausführungsbeispielen kann die Sensoranordnung 18 den jeweiligen Identifizierungscode 62a, 62c in die Ausgangssignale an den Anschlusspins 68, 70 integrieren, insbesondere in Form eines Binärcodes mit aufeinanderfolgenden Bits.

## Patentansprüche

1. Sensoranordnung zum Detektieren eines sicheren Anlagenzustandes einer automatisiert betriebenen Anlage (10), mit einem Eingangskreis (60), der zum Aufnehmen eines ersten Eingangssignals (66c) und zum Aufnehmen von zumindest einem weiteren Eingangssignal (66a) ausgebildet ist, wobei das erste Eingangssignal (66c) von dem zu detektierenden sicheren Anlagenzustand abhängt, und wobei das weitere Eingangssignal (66a) von einem weiteren Zustand abhängt, mit zumindest einem ersten und einem zweiten Ausgang (68, 70) zum Ausgeben eines ersten und eines zweiten Ausgangssignals (76, 78), mit einer Auswerteeinheit (64), die dazu ausgebildet ist, das erste Eingangssignal (66c) fehlersicher auszuwerten und in Abhängigkeit davon das erste und das zweite Ausgangssignal (76, 78) an dem ersten und zweiten Ausgang (68, 70) zu erzeugen, wobei das erste und das zweite Ausgangssignal (76, 78) ein redundantes Signalpaar bilden, welches gemeinsam den sicheren Anlagenzustand signalisiert, und mit einem ersten Gerätegehäuse (54), in dem der Eingangskreis (60) und die Auswerteeinheit (64) angeordnet sind, und mit einem vom ersten Gerätegehäuse (54) räumlich getrennten ersten Betätiger (22c), der das erste Eingangssignal (66c) erzeugt, wobei der erste Betätiger (22c) einen individuellen Identifizierungscode (62c) aufweist, der über das erste Eingangssignal (66c) an die Auswerteeinheit (64) übertragen wird, **gekennzeichnet durch** zumindest einen weiteren Betätiger (22a) mit einem weiteren individuellen Identifizierungscode (62a), wobei die Auswerteeinheit (64) ferner dazu ausgebildet ist, das weitere Eingangssignal (66a) auszuwerten und in Abhängigkeit davon ein drittes Ausgangssignal (80) an dem ersten Ausgang (68) und ein viertes Ausgangssignal (82) an dem zweiten Ausgang (70) zu erzeugen, wobei das dritte und das vierte Ausgangssignal (80, 82) ein nicht-redundantes Signalpaar bilden, das sich von dem redundanten Signalpaar unterscheidet, und wobei die Auswerteeinheit (64) das erste Eingangssignal (66c) und das weitere Eingangssignal (66a) anhand des ersten und des weiteren individuellen Identifizierungscodes (62c, 62a) voneinander unterscheidet.

2. Sensoranordnung nach Anspruch 1, **dadurch gekennzeichnet, dass** die Auswerteeinheit (64) das redundante Signalpaar mit dem ersten und zweiten Ausgangssignal (76, 78) genau dann erzeugt, wenn der Eingangskreis (60) nur das erste Eingangssignal (66c) aufnimmt.

3. Sensoranordnung nach Anspruch 1 oder 2, **dadurch gekennzeichnet, dass** die Ausgangssignale (76, 78, 80, 82) am ersten und zweiten Ausgang (68, 70) jeweils binäre Signale sind, die entweder einen aktiven ersten oder einen passiven zweiten Signalpegel aufweisen, wobei das erste und das zweite Ausgangssignal (76, 78) jeweils den aktiven ersten Signalpegel aufweisen.

4. Sensoranordnung nach Anspruch 3, **dadurch gekennzeichnet, dass** das dritte Ausgangssignal (80) oder das vierte Ausgangssignal (82) dem passiven zweiten Signalpegel entspricht.

5. Sensoranordnung nach einem der Ansprüche 1 bis 4, **dadurch gekennzeichnet, dass** das erste und das zweite Ausgangsignal (76, 78) regelmäßig wechselnde Signalpegel (84) aufweisen.

6. Sensoranordnung nach einem der Ansprüche 1 bis 5, **dadurch gekennzeichnet, dass** die Auswerteeinheit (64) das redundante Signalpaar und das nicht-redundante Signalpaar in zeitlich aufeinanderfolgenden Intervallen erzeugt.

7. Sensoranordnung nach einem der Ansprüche 1 bis 6, **dadurch gekennzeichnet, dass** die Auswerteeinheit (64) den individuellen Identifizierungscode (62) in zumindest eines der Ausgangssignale (76, 78, 80, 82) integriert.

## Claims

1. A sensor arrangement for detecting a safe installation state of an installation (10) operated in an automated manner, comprising an input circuit (60) designed to receive a first input signal (66c) and designed to receive at least one further input signal (66a), with the first input signal (66c) depending on the safe installation state to be detected, and with the further input signal (66a) depending on a further state, comprising at least a first output and a second output (68, 70) for outputting a first output signal and a second output signal (76, 78), comprising an evaluation unit (64) designed to evaluate the first input signal (66c) in a fail-safe manner and, on the basis thereof, to generate the first and second output signals (76, 78) at the first and second outputs (68, 70), with the first and second output signals (76, 78) forming a redundant signal pair which in combination signals the safe installation state, and comprising a first device housing (54), in which the input circuit (60) and the evaluation unit (64) are arranged, and comprising an actuator (22c) which is spatially separate from the first device housing (54) and generates the first input signal (66c), with the first actuator (22c) having an individual identification code (62c) which is transmitted to the evaluation unit (64) via the first input signal (66c), **characterized by** at least one further actuator (22a) with a further individual identification code (62a), wherein the evaluation unit (64) is further designed to evaluate the further input signal (66a) and, on the basis thereof, to generate a third output signal (80) at the first output (68) and a fourth output signal (82) at the second output (70), with the third and fourth output signals (80, 82) forming a non-redundant signal pair which differs from the redundant signal pair, and wherein the evaluation unit (64) distinguishes the first input signal (66c) from the further input signal (66a) on the basis of the first individual identification code and the further individual identification code (62a, 62c).

2. The sensor arrangement of Claim 1, **characterized in that** the evaluation unit (64) generates the redundant signal pair with the first and second output signals (76, 78) only when the input circuit (60) receives only the first input signal (66c).

3. The sensor arrangement of Claim 1 or 2, **characterized in that** the output signals (76, 78, 80, 82) at the first and second outputs (68, 70) each are binary signals having either an active first signal level or a passive second signal level, with the first and second output signals (76, 78) each having the active first signal level.

4. The sensor arrangement of Claim 3, **characterized in that** the third output signal (80) or the fourth output signal (82) corresponds to the passive second signal level.

5. The sensor arrangement of one of Claims 1 to 4, **characterized in that** the first and second output signals (76, 78) each have regularly changing signal levels (84).

6. The sensor arrangement of one of Claims 1 to 5, **characterized in that** the evaluation unit (64) generates the redundant signal pair and the non-redundant signal pair in temporally successive intervals.

7. The sensor arrangement of one of claims 1 to 6, **characterized in that** the evaluation unit (64) integrates the individual identification code (62) in at least one of the output signals (76, 78, 80, 82).

## Revendications

1. Agencement de capteurs destiné à détecter un état sécurisé d'installation d'une installation automatisée (10), comportant un circuit d'entrée (60) qui est conçu pour acquérir un premier signal d'entrée (66c) et pour acquérir au moins un autre signal d'entrée (66a), dans lequel le premier signal d'entrée (66c) dépend de l'état sécurisé d'installation détecté, et dans lequel l'autre signal d'entrée (66a) dépend d'un autre état, comportant au moins des première et deuxième sorties (68, 70) destinées à délivrer des premier et deuxième signaux de sortie (67, 78), une unité d'évaluation (64) qui est conçue pour évaluer sans erreur le premier signal d'entrée (66c) et pour générer en fonction de celui-ci les premier et deuxième signaux de sortie (76, 78) sur les première et deuxième sorties (68, 70), dans lequel les premier et deuxième signaux de sortie (76, 78) forment une paire redondante de signaux, laquelle paire signale en commun l'état sécurisé d'installation, et comportant un premier boîtier d'appareil (54) dans lequel sont disposés le circuit d'entrée (60) et l'unité d'évaluation (64), et un premier actionneur (22c) spatialement séparé du premier boîtier d'appareil (54), qui génère le premier signal d'entrée (66c), dans lequel le premier actionneur (22c) comporte un premier code d'identification individuel (62c) qui est transmis par l'intermédiaire du premier signal d'entrée (66c) à l'unité d'évaluation (64),
**caractérisé par** au moins un autre actionneur (22a) comportant un autre code d'identification individuel (62a), dans lequel l'unité d'évaluation (64) est en outre conçue pour évaluer l'autre signal d'entrée (66a) et pour générer en fonction de celui-ci un troisième signal de sortie (80) sur la première sortie (68) et un quatrième signal de sortie (82) sur la deuxième sortie (70), dans lequel les troisième et quatrième signaux de sortie (80, 82) forment une paire non redondante de signaux qui est différente de la paire redondante de signaux, et dans lequel l'unité d'évaluation (64) différencie l'un de l'autre le premier signal d'entrée (66c) et l'autre signal d'entrée (66a) sur la base des premier et deuxième codes d'identification individuels (62c, 62a).

2. Agencement de capteurs selon la revendication 1, **caractérisé en ce que** l'unité d'évaluation (64) ne génère la paire redondante de signaux au moyen des premier et deuxième signaux de sortie (76, 78) que lorsque le circuit d'entrée (60) n'acquiert exactement que le premier signal d'entrée (66c).

3. Agencement de capteurs selon la revendication 1 ou 2, **caractérisé en ce que** les signaux de sortie (76, 78, 80, 82) sur les première et deuxième sorties (68, 7à) sont respectivement des signaux binaires qui présentent l'un ou l'autre d'un premier niveau de signal actif et d'un deuxième niveau de signal passif, dans lequel les premier et deuxième signaux de sortie (76, 78) présentent respectivement le premier niveau actif.

4. Agencement de capteurs selon la revendication 3, **caractérisé en ce que** le troisième signal de sortie (80) ou le quatrième signal de sortie (82) correspond au deuxième niveau de signal passif.

5. Agencement de capteurs selon l'une des revendications 1 à 4, **caractérisé en ce que** les premier et deuxième signaux de sortie (76, 78) présentent des niveaux de signal (83) qui alternent régulièrement.

6. Agencement de capteurs selon l'une des revendications 1 à 5, **caractérisé en ce que** l'unité d'évaluation (64) génère la paire redondante de signaux et la paire non redondante de signaux au cours d'intervalles de temps consécutifs.

7. Agencement de capteurs selon l'une des revendications 1 à 6, **caractérisé en ce que** l'unité d'évaluation (64) intègre les codes d'identification individuels (62) dans au moins l'un des signaux de sortie (76, 78, 80, 82).
